# FASCICULE DE BREVET EUROPEEN

(11) **EP 1 740 442 B1**
(45) Date de publication et mention de la délivrance du brevet: **12.03.2008**
(21) Numéro de dépôt: 05762418.1
(22) Date de dépôt: 25.04.2005
(51) Int. Cl.: B62D 37/02, B62D 35/00

(54) **DISPOSITIF AERODYNAMIQUE POUR UN VEHICULE AUTOMOBILE ET VEHICULE AUTOMOBILE EQUIPE D'UN TEL DISPOSITIF**
STROMLINIENFÖRMIGE VORRICHTUNG FÜR EIN KRAFTFAHRZEUG UND DAMIT AUSGESTATTETES KRAFTFAHRZEUG
STREAMLINED DEVICE FOR A MOTOR VEHICLE AND MOTOR VEHICLE EQUIPPED WITH SAME

(30) Priorité: 28.04.2004 FR 0404525
(43) Date de publication de la demande: 10.01.2007
(73) Titulaire: PEUGEOT CITROËN AUTOMOBILES S.A., 78140 Vélizy Villacoublay (FR)
(72) Inventeur: SELAQUET, Didier, F-92130 Issy Les Moulineaux (FR); LEROUX, Charles, F-78830 Bullion (FR); VILLADIER, Bernard, F-91370 Verrieres Le Buisson (FR); HILLAIRET, Blandine, F-92150 Suresnes (FR); AIDER, Jean-Luc, F-92170 Vanves (FR)
(74) Mandataire: Habasque, Etienne J. Jean-François
(86) Numéro de dépôt international: PCT/FR2005/001024
(87) Numéro de publication internationale: WO 2005/105555

(56) Documents cités:
- EP-A- 1 506 910
- ADAM J-L: "TOUT EN FINESSE" REVUE AUTOMOBILE, HALLWAG S.A. BERNE, CH, no. 46, 13 novembre 2003 (2003-11-13), page 7, XP001178725 ISSN: 0035-0761

## Description

La présente invention concerne un dispositif aérodynamique pour un véhicule automobile et également un véhicule automobile équipé d'un tel dispositif aérodynamique.

Les véhicules automobiles, lorsqu'ils roulent, sont soumis à un certain nombre d'efforts qui s'oppose à leur avancement. Ces efforts sont en particulier les frottements solides, c'est à dire les contacts des roues avec le sol, et les frottements aérodynamiques, comme par exemple les frottements de l'air sur les parois de la carrosserie du véhicule.

En plus de ces frottements, les véhicules automobiles sont soumis à une troisième source d'efforts qui s'oppose également à leur avancement. Ces efforts sont les forces aérodynamiques exercées sur le véhicule à travers des régions de surpression et de dépression. En effet, à haute vitesse, ces efforts deviennent dominant par rapport aux autres et jouent un rôle essentiel sur la consommation et la stabilité du véhicule.

Ces forces aérodynamiques sont essentiellement générées par les dépressions créées par les décollements, les recirculations et les tourbillons longitudinaux de l'air. Les recirculations et donc les régions de basse pression sont importantes sur l'arrière du véhicule et particulièrement au niveau de la lunette arrière et du coffre. En effet, les écoulements de l'air à l'arrière des véhicules automobiles sont complexes et, en général, il se produit un équilibre entre les décollements et les tourbillons longitudinaux.

Les dispositifs utilisés en aérodynamique automobile interviennent sur le décollement qui a lieu sur l'arrière du véhicule, en particulier dans la région du raccord entre le pavillon et la lunette arrière, d'une part, et la lunette arrière et le coffre, d'autre part.

Les dispositifs classiques sont essentiellement constitués par des becquets, des ailerons ou des déflecteurs placés dans ces zones à l'arrière du véhicule.

Le becquet est utilisé le plus souvent pour réduire le coefficient de pénétration dans l'air et les autres systèmes sont plutôt utilisés pour réduire la portance.

On connaît également des dispositifs aérodynamiques qui sont constitués par une ou plusieurs ailettes formant au moins un générateur de vortex et disposées dans au moins une zone tourbillonnaire d'au moins un élément de la carrosserie du véhicule automobile. Les ailettes sont le plus souvent déplaçables entre une position escamotée et une position en saillie dans laquelle elles perturbent les structures tourbillonnaires générées autour des éléments de carrosserie du véhicule. Un tel dispositif est décrit par Adam, J-L, dans Tout en finesse, "Revue automobile No 46, page 7, du 13/11/2003.

Mais, l'intégration de ces ailettes sur les éléments de carrosserie impose des contraintes.

En effet, les ailettes doivent impérativement être escamotées lorsque le véhicule est à l'arrêt ou lorsque les vitesses de roulage sont faibles ou lorsque les conditions extérieures nécessitent leur rétraction ou leur non déploiement par exemple en cas d'obstacle tels que la neige, la glace ou des bagages sur le toit.

De plus ces ailettes doivent être le moins visible possible en position rétractée.

Pour le déplacement des ailettes entre la position escamotée et la position déployée plusieurs cinématiques peuvent être envisagées.

La première consiste à déplacer des ailettes verticalement par translation à travers une fente ménagée dans l'élément de carrosserie correspondant.

Mais, si cette disposition présente l'avantage d'être discrète dans la position rétractée des ailettes, elle a pour principal inconvénient d'être très encombrante au niveau du mécanisme de déplacement vertical de ces ailettes. De plus, elle ne permet pas un réglage angulaire des ailettes en fonction des conditions d'utilisation du véhicule.

La seconde cinématique connue pour le déplacement des ailettes consiste à faire pivoter ces ailettes autour d'un axe de rotation disposé dans une empreinte ménagée dans l'élément de carrosserie.

Cette disposition par rapport à la précédente présente l'avantage de pouvoir régler l'angle d'inclinaison de ces ailettes par rapport à l'élément de carrosserie en fonction de l'utilisation du véhicule. Par contre, son principal inconvénient est de laisser une empreinte de la taille de chaque ailette sur l'élément de carrosserie ce qui nuit à l'esthétique général du véhicule automobile.

L'invention a pour but de proposer un dispositif aérodynamique qui permet d'éviter les inconvénients précédemment mentionnés et qui permet de contrôler les tourbillons longitudinaux et les décollements et, d'une manière générale, la structure globale de l'écoulement de l'air sur les éléments de la carrosserie d'un véhicule automobile, tout en permettant d'avoir à la fois un encombrement minimum et un aspect le plus discret possible.

L'invention a donc pour objet un dispositif aérodynamique pour un véhicule automobile comprenant au moins un générateur de vortex formé par au moins une ailette disposée au moins en amont ou au niveau ou en aval d'au moins une zone tourbillonnaire d'au moins un élément de la carrosserie du véhicule, caractérisé en ce que la base de ladite ailette est montée articulée par l'intermédiaire d'un axe de rotation (12) sur un support et en ce qu'il comprend des moyens de déplacement en translation de ce support selon une trajectoire parallèle à l'élément de carrosserie et des moyens de basculement de ladite ailette autour dudit axe (12) simultanément à sa translation, entre une position escamotée au-dessous de cet élément de carrosserie et une position en saillie par rapport audit élément de carrosserie.

Selon d'autres caractéristiques de l'invention:
- ledit générateur de vortex est formé par au moins une ligne d'ailettes montées chacune articulées sur ledit support,
- ladite ailette présente une forme convexe dont la courbure est dirigée vers l'extérieur du véhicule dans la position escamotée de cette ailette,
- le support est formé par un tiroir monté coulissant au-dessous de l'élément de carrosserie correspondant,
- les moyens de déplacement du tiroir comprennent un ensemble de commande formé par exemple par un système moteur électrique et pignon-crémaillère,
- les moyens de basculement de ladite ailette sont formés par une fente ménagée dans l'élément de carrosserie et dans laquelle est disposée l'extrémité libre de l'ailette dans sa position escamotée,
- le déplacement du support de ladite ailette est piloté au moyen de l'ensemble de commande en fonction d'informations fournies par au moins un capteur de pression et/ou de vitesse et/ou de frottements implanté sur au moins un desdits éléments de carrosserie du véhicule automobile.

L'invention a aussi pour objet un véhicule automobile, caractérisé en ce qu'il comprend au moins un dispositif aérodynamique tel que précédemment mentionné.

L'invention sera mieux comprise à la lecture de la description qui va suivre, donnée à titre d'exemple et faite en référence aux dessins annexés, sur lesquels:
- la Fig. 1 est une vue schématique en perspective de l'arrière d'un véhicule automobile équipé d'au moins un dispositif aérodynamique conforme à l'invention,
- la Fig. 2 est une vue schématique à plus grande échelle d'un exemple d'implantation d'un dispositif aérodynamique sur le raccord transversal entre le pavillon et la lunette arrière d'un véhicule automobile,
- la Fig. 3 est une vue schématique du raccord transversal de la partie arrière du véhicule automobile avec le dispositif aérodynamique en position escamotée,
- la Fig. 4 est une vue schématique en coupe transversale d'une ailette du dispositif aérodynamique, respectivement en position escamotée et en position active, et
- la Fig. 5 est une vue schématique en perspective des moyens de commande du dispositif aérodynamique conforme à l'invention.

Les véhicules automobiles, lorsqu'ils roulent sont soumis à des efforts qui s'opposent à leur avancement et qui sont les frottements solides, les frottements aérodynamiques et, à haute vitesse, les forces aérodynamiques générées par les dépressions et par les décollements, les recirculations et les tourbillons longitudinaux de l'air.

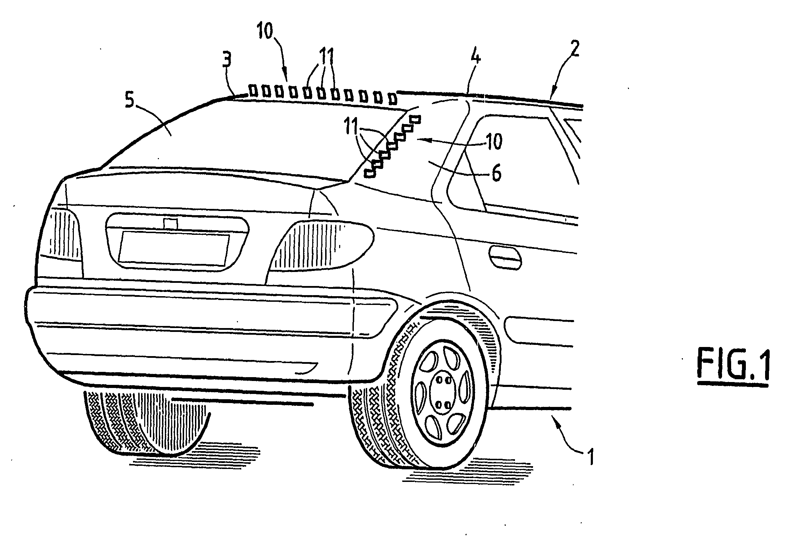

Ainsi, une carrosserie 2 d'un véhicule automobile 1, comme représentée à la Fig. 1, comporte des régions de basse pression où ces phénomènes sont particulièrement importants.

Ces zones de la carrosserie 2 du véhicule automobile sont par exemple le raccord transversal 3 entre le pavillon 4 et la lunette arrière 5 et les montants de baie arrière 6.

Ces zones de carrosserie sont aussi par exemple les montants de baie avant, le raccord transversal entre le pavillon et le pare-brise, les ailes arrière, les régions entourant les passages de roues avant et/ou les passages de roues arrière et les régions de soubassement entourant les passages de roues avant et/ou arrière.

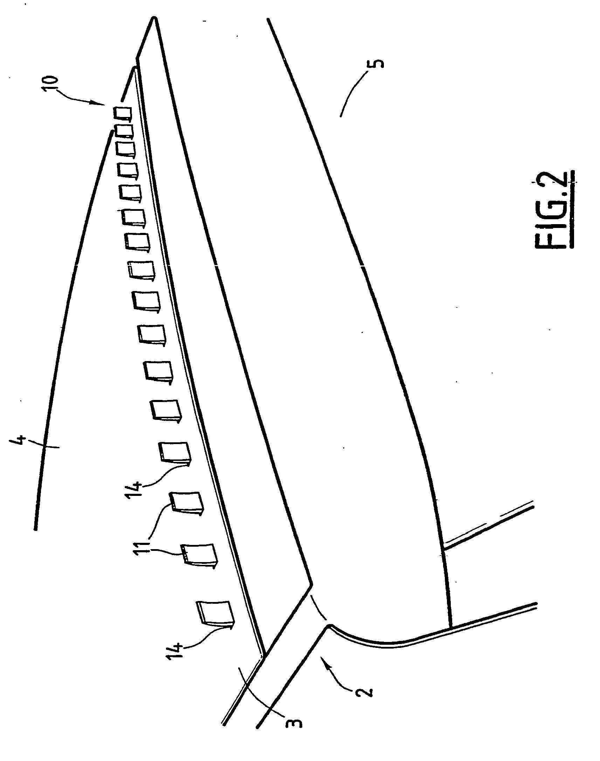

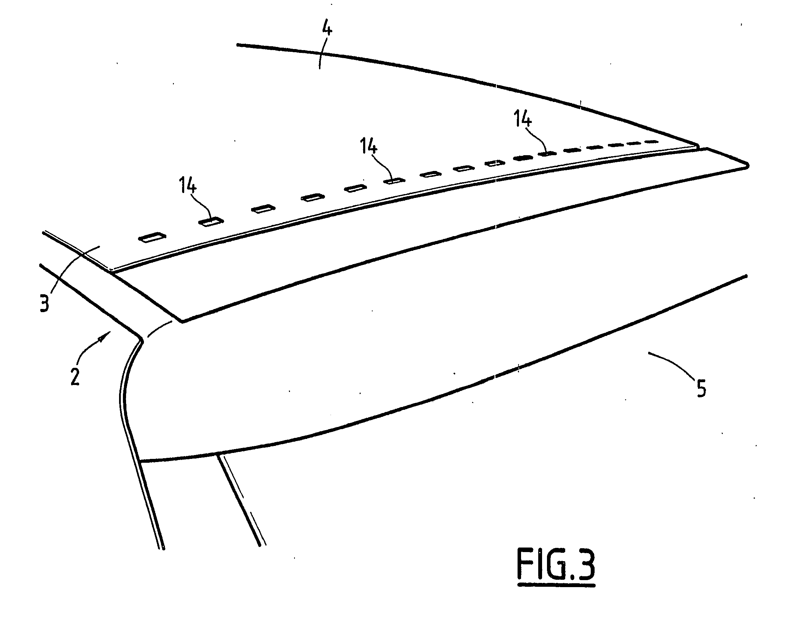

Comme montré sur les Figs. 2 et 3, le dispositif aérodynamique selon l'invention est par exemple implanté sur le raccord transversal 3 entre le pavillon 4 et la lunette arrière 5. Les dispositifs aérodynamiques implantés sur d'autres zones des éléments de la carrosserie 2 sont identiques.

Le dispositif aérodynamique comprend au moins un système de générateur de vortex composé d'au moins une ailette 11. Dans l'exemple de réalisation représenté sur les figures, le système générateur de vortex comprend une ligne 10 d'ailettes 11 disposées au moins en amont ou au niveau ou en aval de ladite zone tourbillonnaire et cette ligne 10 d'ailettes 11 est déplaçable entre une position déployée en saillie par rapport au pavillon 4 pour réduire la traînée et la portance de ce véhicule automobile, ainsi que représentée à la Fig. 2 et une position escamotée, ainsi que représentée à la Fig. 3.

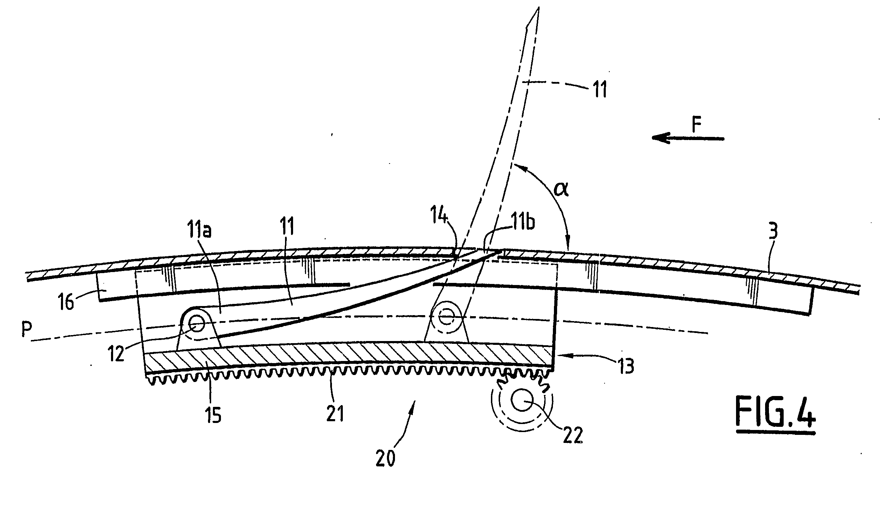

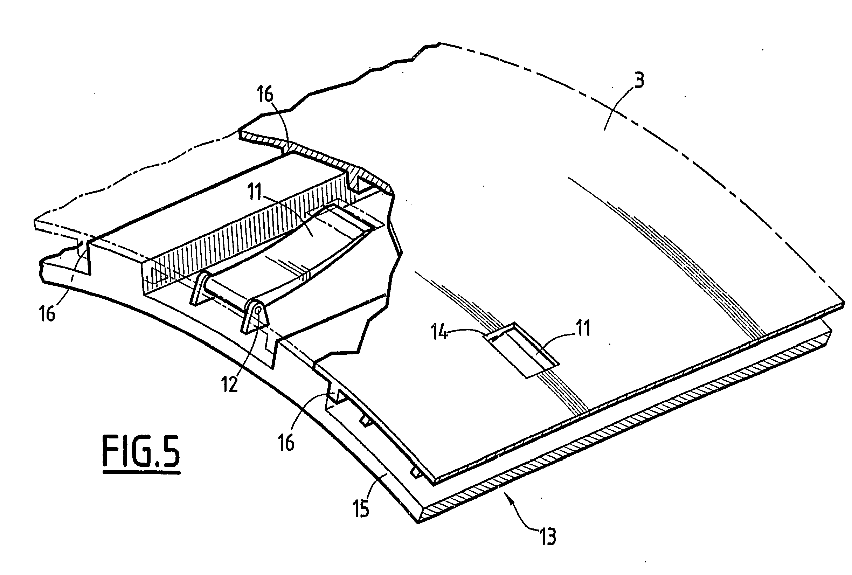

En se reportant maintenant aux Figs. 4 et 5, on va décrire une ailette 11 ainsi que les moyens de déplacement de la ligne 10 d'ailettes 11.

La base 11 a de l'ailette 11 est montée articulée par l'intermédiaire d'un axe de rotation 12 sur un support désigné dans son ensemble par la référence 13.

D'une manière générale, le dispositif aérodynamique comprend également des moyens de déplacement en translation du support 13 selon une trajectoire P (Fig. 4) parallèle à l'élément de carrosserie correspondant et dans l'exemple de réalisation représenté sur les figures, selon une trajectoire parallèle au raccord transversal 3 entre le pavillon 4 et la lunette arrière 5.

Le dispositif aérodynamique comprend également des moyens de basculement de la ligne 10 d'ailettes 11 simultanément à la translation de ces ailettes 11 par l'intermédiaire du support 13 entre la position escamotée au-dessous de l'élément de carrosserie 3 et la positon en saillie par rapport à cet élément de carrosserie.

Ainsi que montré à la Fig. 4, chaque ailette 11 présente une forme convexe dont la courbure est dirigée vers l'extérieur du véhicule dans la position escamotée de ladite ailette 11. Cette forme légèrement courbée facilite le guidage de l'ailette 11 lors de son pivotement autour de l'axe de rotation 12 dans la position déployée en saillie par rapport à l'élément de carrosserie 3.

A cet effet, les moyens de basculement de chaque ailette 11 sont formés par une fente 14 ménagée dans l'élément de carrosserie 3 et dans laquelle l'extrémité libre 11b de l'ailette 11 correspondante est disposée dans la position escamotée de cette ailette. La largeur de chaque fente 14 est légèrement supérieure à la largeur de l'ailette 11 correspondante.

Ainsi que représenté sur les Figs. 4 et 5, le support 13 est constitué par un tiroir 15 portant les ailettes 11 et qui est monté coulissant au-dessous de l'élément de carrosserie 3 correspondant par l'intermédiaire de glissières 16 ménagées sur la face interne de cet élément de carrosserie 3.

Les moyens de déplacement du tiroir 15 portant les ailettes 11 comprennent un ensemble de commande désigné par la référence générale 20 et qui est formé par exemple par une crémaillère 21 solidaire du tiroir 15 et par un pignon 22 engrènant avec ladite crémaillère 21 et entraîné en rotation par un moteur électrique, non représenté.

Lorsque le moteur électrique entraîne le pignon 22, ce pignon 22 engrène avec la crémaillère 21 ce qui a pour effet de déplacer en translation le tiroir 15 portant les ailettes 11 selon une trajectoire parallèle à l'élément de carrosserie 3 soit vers l'avant du véhicule, soit vers l'arrière dudit véhicule. Au cours de ce déplacement, chaque ailette 11 coulisse dans la fente 14 correspondante provoquant ainsi le basculement de chacune de ces ailettes 11 autour de son axe de rotation 12 simultanément à sa translation.

Ces ailettes 11 se déplacent donc entre une position escamotée représentée en traits pleins à la Fig. 4 et une position en saillie par rapport à l'élément de carrosserie 3 représentée en traits mixtes sur cette Fig. 4. Sur cette figure le sens de l'écoulement de l'air par rapport aux ailettes 11 est représenté par la flèche F.

Selon les conditions d'utilisation du véhicule automobile, les ailettes 11 de la ligne 10 peuvent être plus ou moins en saillie par rapport à l'élément de carrosserie 3 et l'angle α entre chaque ailette 11 et cet élément de carrosserie 3 est donc plus ou moins important.

A cet effet, le déplacement du support 13 portant la ligne 10 d'ailettes 11 peut être piloté au moyen de l'ensemble de commande 20 en fonction d'informations fournies par au moins un capteur de pression et/ou de vitesse et/ou de frottement implanté sur au moins un des éléments de la carrosserie du véhicule automobile.

Par ailleurs, les ailettes 11 de la ligne 10 peuvent être déplacées au moyen de l'ensemble de commande 20 entre les positions escamotée et en saillie, par exemple lors d'un freinage d'urgence. L'ensemble de commande 20 est alors activé très rapidement de façon à améliorer la portance arrière du véhicule et à aider le conducteur à garder le contrôle de ce véhicule.

Enfin, le déplacement des ailettes 11 de la ligne 10 peut aussi être piloté au moyen de l'ensemble de commande 20 directement par l'utilisateur du véhicule.

L'ensemble de commande 20 est suffisamment robuste pour supporter les efforts aérodynamiques exercés sur les ailettes par l'écoulement de l'air et aussi permettre la réintégration de ces ailettes en position escamotée même lors que le véhicule roule à haute vitesse.

Chaque ailette 11 perturbatrice d'écoulement présente donc une forme déterminée qui génère des tourbillons en aval de cette ailette 11 ce qui permet de réduire la traînée et la portance du véhicule automobile, qu'il soit monospace, bi-corps ou tri-corps. Les ailettes 11 peuvent présenter diverses formes, comme par exemple une forme rectangulaire, carrée ou encore trapézoïdale. Derrière chaque ailette 11, il se produit également une zone de recirculation. Ces ailettes perturbent les structures tourbillonnaires générées autour des éléments de carrosserie du véhicule automobile.

Lors du déplacement de la ligne 10 des ailettes 11 entre la position en saillie et la position escamotée, chaque ailette 11 glisse dans la fente 14 correspondante par le déplacement du tiroir 15 et reprend sa position initiale.

Le dispositif aérodynamique selon l'invention présente l'avantage de pouvoir être intégré dans des éléments de carrosserie possédant des courbures complexes, tout en ayant un faible encombrement au-dessous de cet élément de carrosserie.

De plus, il présente un aspect le plus discret possible ce qui ne nuit pas à l'esthétique général du véhicule automobile.

## Revendications

1. Dispositif aérodynamique pour un véhicule automobile comprenant au moins un générateur de vortex formé par au moins une ailette (11) disposée au moins en amont ou au niveau ou en aval d'au moins une zone tourbillonnaire d'au moins un élément (4, 5, 6) de la carrosserie (2) du véhicule **caractérisé en ce que** la base (11a) de ladite ailette (11) est montée articulée par l'intermédiaire d'un axe de rotation (12) sur un support (13) et **en ce qu'**il comprend des moyens (20) de déplacement en translation de ce support (13) selon une trajectoire parallèle à l'élément (4, 5, 6) de carrosserie et des moyens (14) de basculement de ladite ailette (11) autour dudit axe (12) simultanément à sa translation, entre une position escamotée au-dessous de cet élément (4, 5, 6) de carrosserie et une position en saillie par rapport audit élément.

2. Dispositif aérodynamique selon la revendication 1, **caractérisé en ce que** ledit générateur de vortex est formé par au moins une ligne (10) d'ailettes (11) montées chacune articulées sur ledit support (13).

3. Dispositif aérodynamique selon la revendication 1 ou 2, **caractérisé en ce que** ladite ailette (11) présente une forme convexe dont la courbure est dirigée vers l'extérieur du véhicule dans la position escamotée de cette ailette (11).

4. Dispositif aérodynamique selon l'une quelconque des revendications 1 à 3, **caractérisé en ce que** le support (13) est formé par un tiroir (15) monté coulissant au-dessous de l'élément (4, 5, 6) de carrosserie correspondant.

5. Dispositif aérodynamique selon la revendication 4, **caractérisé en ce que** les moyens (20) de déplacement du tiroir (15) comprennent un ensemble de commande formé par exemple par un système moteur électrique et pignon-crémaillère.

6. Dispositif aérodynamique selon l'une quelconque des revendications 1 à 5, **caractérisé en ce que** les moyens de basculement de ladite ailette (11) sont formés par une fente (14) ménagée dans l'élément (4, 5, 6) de carrosserie et dans laquelle est disposée l'extrémité libre (11b) de l'ailette (11) dans sa position escamotée.

7. Dispositif aérodynamique selon l'une quelconque des revendications 1 à 6, **caractérisé en ce que** le déplacement du support (13) de ladite ailette (11) est piloté au moyen de l'ensemble de commande (20) en fonction d'informations fournies par au moins un capteur de pression et/ou de vitesse et/ou de frottement implanté sur au moins desdits éléments (4, 5, 6) de carrosserie du véhicule.

8. Véhicule automobile, **caractérisé en ce qu'**il comporte au moins un dispositif aérodynamique selon l'une quelconque des revendications précédentes.

## Claims

1. Aerodynamic device for a motor vehicle, comprising at least one vortex generator formed by at least one fin (11) arranged at least downstream or within or upstream of at least one turbulent zone of at least one element (4, 5, 6) of the body (2) of the vehicle, **characterised in that** the base (11 a) of said fin (11) is mounted in articulated manner by means of a rotational shaft (12) on a support (13), and **in that** it comprises means (20) for translational movement of that support (13) along a path parallel to the element (4, 5, 6) of the body and means (14) for tilting said fin (11) about said shaft (12), simultaneously with its translation, between a retracted position underneath that body element (4, 5, 6) and a position projecting out from said element.

2. Aerodynamic device according to claim 1, **characterised in that** said vortex generator is formed by at least one line (10) of fins (11) each of which is mounted in articulated manner on said support (13).

3. Aerodynamic device according to claim 1 or 2, **characterised in that** said fin (11) has a convex shape the curvature of which is directed towards the exterior of the vehicle in the retracted position of that fin (11).

4. Aerodynamic device according to any one of claims 1 to 3, **characterised in that** the support (13) is formed by a slider (15) slidingly mounted underneath the corresponding body element (4, 5, 6).

5. Aerodynamic device according to claim 4, **characterised in that** the means (20) for movement of the slider (15) comprise a control arrangement formed, for example, by an electric motor and rack-and-pinion system.

6. Aerodynamic device according to any one of claims 1 to 5, **characterised in that** the means for tilting said fin (11) are formed by a slot (14) which is provided in the body element (4, 5, 6) and in which the free end (11 b) of the fin (11) is arranged in its retracted position.

7. Aerodynamic device according to any one of claims 1 to 6, **characterised in that** the movement of the support (13) of said fin (11) is controlled by means of the control arrangement (20) as a function of information provided by at least one pressure sensor and/or speed sensor and/or friction sensor located at least at elements (4, 5, 6) of the body of the vehicle.

8. Motor vehicle, **characterised in that** it comprises at least one aerodynamic device according to any one of the preceding claims.

## Patentansprüche

1. Aerodynamische Vorrichtung für ein Kraftfahrzeug, welche über mindestens einen Wirbelerzeuger mit mindestens einem Flügel (11) verfügt, der mindestens einem Wirbelbereich mindestens eines Bestandteils (4, 5, 6) der Karosserie (2) des Fahrzeugs vorgelagert beziehungsweise nachgelagert ist oder sich auf dessen Höhe befindet. Die Vorrichtung zeichnet sich **dadurch** aus, dass der Fuß (11a) dieses Flügels (11) mit Gelenken versehen mit Hilfe einer Rotationsachse (12) auf einer Halterung (13) angebracht wird und dass sie über Systeme (20) verfügt, mit denen durch Übersetzung dieser Halterung (13) über eine parallel verlaufende Bahn am Karosseriebestandteil (4, 5, 6) Bewegungen vorgenommen werden können, und über Systeme (14), mit denen der Flügel (11) um die besagte Achse herum (12) gleichzeitig mit der Übersetzung von der eingezogenen Position unterhalb dieses Karosseriebestandteils (4, 5, 6) in eine im Verhältnis zum betreffenden Bestandteil überstehende Position gekippt werden kann.

2. Aerodynamische Vorrichtung gemäß Anspruch 1, **dadurch gekennzeichnet, dass** der Wirbelerzeuger aus mindestens einer Reihe (10) von Flügeln (11) besteht, wobei jeder einzelne mit Gelenken versehen auf der besagten Halterung (13) angebracht ist.

3. Aerodynamische Vorrichtung gemäß Anspruch 1 beziehungsweise 2, **dadurch gekennzeichnet, dass** der besagte Flügel (11) eine konvexe Form aufweist, wobei dessen Wölbung in Richtung der Fahrzeugaußenseite zeigt, wenn der Flügel (11) eingezogen ist.

4. Aerodynamische Vorrichtung gemäß einem der Ansprüche 1 bis 3, **dadurch gekennzeichnet, dass** die Halterung (13) über einen verstellbaren Schieber (15) verfügt, welcher unterhalb des zugehörigen Karosseriebestandteils (4, 5, 6) angebracht ist.

5. Aerodynamische Vorrichtung gemäß Anspruch 4, **dadurch gekennzeichnet, dass** die Verstellsysteme (20) des Schiebers (15) über eine Steuerungseinheit verfügen, welche beispielsweise mit einem System aus Elektromotor und Zahnstange-Ritzel versehen ist.

6. Aerodynamische Vorrichtung gemäß einem der Ansprüche 1 bis 5, **dadurch gekennzeichnet, dass** die Kippsysteme des besagten Flügels (11) über einen geführten Schlitz (14) im Karosseriebestandteil (4, 5, 6) verfügen, wobei sich darin im eingezogenen Zustand des Flügels (11) dessen freies Ende (11b) befindet.

7. Aerodynamische Vorrichtung gemäß einem der Ansprüche 1 bis 6, **dadurch gekennzeichnet, dass** das Verstellen der Halterung (13) des besagten Flügels (11) mit Hilfe der Steuerungseinheit (20) anhand von Informationen gesteuert wird, welche von mindestens einem Druck-, Geschwindigkeits- beziehungsweise Reibungsmesser bereit gestellt werden, der auf mindestens einem der besagten Karosseriebestandteile (4, 5, 6) des Kraftfahrzeugs angebracht ist.

8. Kraftfahrzeug, **dadurch gekennzeichnet, dass** es über mindestens eine aerodynamische Vorrichtung gemäß einem der oben stehenden Ansprüche verfügt.
